# FASCICULE DE BREVET EUROPEEN

(11) **EP 4 263 285 B1**
(45) Date de publication et mention de la délivrance du brevet: **26.02.2025**
(21) Numéro de dépôt: 21815570.3
(22) Date de dépôt: 04.11.2021
(51) Int. Cl.: B60Q 1/00, F21S 43/14, F21S 43/19, F21S 43/237, F21S 43/239, F21S 43/243, F21S 43/20, F21S 43/27, F21S 43/30, F21S 43/37, F21S 43/40, F21S 43/50, F21S 43/31

(54) **BLOC OPTIQUE DE VÉHICULE, À PIÈCE DE SUPPORT MONOBLOC PARTICIPANT À DES FONCTIONS PHOTOMÉTRIQUES**
OPTISCHE EINHEIT FÜR EIN FAHRZEUG MIT AN PHOTOMETRISCHEN FUNKTIONEN TEILNEHMENDEM EINSTÜCKIGEM TRÄGERTEIL
VEHICLE OPTICAL UNIT, WITH SINGLE-PIECE SUPPORT PART PARTICIPATING IN PHOTOMETRIC FUNCTIONS

(30) Priorité: 21.12.2020 FR 2013798
(43) Date de publication de la demande: 25.10.2023
(73) Titulaire: Stellantis Auto SAS, 78300 Poissy (FR)
(72) Inventeur: VIDEIRA, Filipe, 78140 VELIZY VILLACOUBLAY (FR); DESSI, Bruno, 25260 ETOUVANS (FR)
(74) Mandataire: ESIP
(86) Numéro de dépôt international: PCT/FR2021/051950
(87) Numéro de publication internationale: WO 2022/136747

(56) Documents cités:
- EP-A1- 1 033 529
- EP-A1- 3 354 977
- EP-A1- 3 354 978
- EP-A2- 2 194 311
- EP-B1- 2 194 311
- DE-A1- 102012 112 151
- DE-A1- 102017 105 948
- FR-A1- 3 053 442
- FR-A1- 3 087 015
- FR-A1- 3 104 676
- JP-A- 2006 313 681

## Description

### Domaine technique de l'invention

La présente invention revendique la priorité de la demande française 2013798 déposée le 21.12.2020.

L'invention concerne les blocs optiques de véhicule qui assurent au moins deux fonctions photométriques.

### Etat de la technique

Certains véhicules, éventuellement de type automobile, comprennent au moins un bloc optique comprenant un boîtier logeant des pièces et équipements qui pour certains participent à des fonctions photométriques d'éclairage ou de signalisation, comme par exemple une fonction de feu de stop, une fonction de feu de recul, une fonction de feu de brouillard, une fonction d'indicateur de changement de direction (ou clignotant), une fonction de feu de route, une fonction de feu de croisement, une fonction de feu de position (ou veilleuse ou encore lanterne), ou une fonction de feu de jour (ou DRL (pour « Daytime running Light (or Lamp) » - signalisation lumineuse allumée automatiquement lorsque le véhicule est mis en fonctionnement pendant le jour)). Ce type de bloc optique est par exemple décrit dans le document brevet FR-B13008167.

On connait par le document JP2006313681 un outil d'éclairage de véhicule irradiant la lumière provenant d'une pluralité de sources lumineuses dans une direction donnée, susceptible d'être réduit. On connait par le document DE10212112151 un feu arrière de véhicule automobile possédant au moins une fonction de feu de position arrière, une fonction de clignotant et une fonction de feu stop.

Les pièces ou équipements précité(e)s, auxquel(le)s on associe ci-après l'adjectif « optique », peuvent être des sources de lumière (comme par exemple des diodes électroluminescentes (ou LEDs), des masques, des réflecteurs, des collimateurs, des lentilles, des miroirs, ou des guides de lumière (éventuellement plats), par exemple.

Plus les dimensions du bloc optique sont petites, plus le volume disponible dans son boîtier est petit, et plus l'intégration des pièces et équipements optiques devient difficile et/ou complexe. En effet, cette intégration nécessite la présence d'interfaces mécaniques pour l'isostatisme et/ou le pré-maintien et/ou la fixation par vis ou clips, ce qui peut imposer une augmentation de certaines au moins des dimensions du boîtier, et/ou induire des contraintes de style et/ou une augmentation de masse et/ou une augmentation du temps d'assemblage et/ou une augmentation de coût et/ou une augmentation du risque de survenue de bruits parasites et/ou vibrations (notamment du fait des jeux d'assemblage) et/ou une augmentation du risque de fuite de lumière (notamment du fait des jeux d'assemblage et des trous définis pour les fixations ou moyens de clippage).

L'invention a donc notamment pour but de remédier à tout ou partie des inconvénients précités.

### Présentation de l'invention

Elle propose notamment à cet effet un bloc optique destiné à équiper un véhicule et comprenant les caractéristiques de la revendication 1.

Grâce à cette pièce de support monobloc et assurant une partie de chaque fonction photométrique à laquelle participe une source de lumière, le nombre d'interfaces mécaniques du bloc optique est notablement réduit, ce qui permet une réduction de la masse, du temps d'assemblage, du coût, du risque de survenue de bruits parasites et/ou vibrations et du risque de fuite de lumière, et des contraintes de style, ainsi qu'une éventuelle réduction de dimensions du boîtier.

Le bloc optique selon l'invention peut comporter d'autres caractéristiques qui peuvent être prises séparément ou en combinaison, et notamment :
- l'au moins une ouverture peut être masquée totalement par une partie au moins d'une partie auxiliaire ;
- en présence de l'option précédente la partie auxiliaire concernée peut constituer un guide de lumière propre à guider jusqu'à une zone de sortie qu'il comprend des photons générés par la source de lumière associée et ayant traversé l'ouverture associée, ou un élément optique de collimation propre à transmettre de façon collimatée des photons générés par la source de lumière associée en direction d'un réflecteur logé dans le boîtier ;
- les parties auxiliaires de la pièce de support peuvent être réalisées par surmoulage d'une matière choisie dans un groupe comprenant un polycarbonate (ou PC) et un poly-méthacrylate de méthyle (ou PMMA) ;
- la partie principale de la pièce de support peut être réalisée par moulage d'une matière choisie dans un groupe comprenant un polycarbonate (ou PC), un poly-méthacrylate de méthyle (ou PMMA), un acrylonitrile butadiène styrène (ou ABS) et un mélange de polycarbonate et acrylonitrile butadiène styrène (ou ABS PC) ;
- son boîtier peut loger une carte électronique, d'une part, comportant une face avant orientée vers une face arrière de la partie principale et sur laquelle sont installées les sources de lumière, et, d'autre part, couplée à la pièce de support ;
- la partie principale de la pièce de support peut comprendre une face arrière orientée vers les sources de lumière et à partir de laquelle est érigée au moins une protubérance arrière définissant un muret de séparation entre fonctions photométriques.

L'invention propose également un véhicule, éventuellement de type automobile, et comprenant au moins un bloc optique du type de celui présenté ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où la présence de certains niveaux de gris), sur lesquels :
[Fig. 1] illustre schématiquement, dans une première vue en coupe dans un plan longitudinal et vertical, une partie d'un exemple de réalisation d'un bloc optique selon l'invention,
[Fig. 2] illustre schématiquement, dans une seconde vue en coupe dans un autre plan longitudinal et vertical, une autre partie du bloc optique de la figure 1,
[Fig. 3] illustre schématiquement, dans une vue en perspective du côté de la face avant, un exemple de réalisation de la pièce de support du bloc optique des figures 1 et 2,
[Fig. 4] illustre schématiquement, dans une vue en coupe dans encore un autre plan longitudinal et vertical, une première portion de la partie inférieure avant du bloc optique des figures 1 et 2, et
[Fig. 5] illustre schématiquement, dans une vue en coupe dans encore un autre plan longitudinal et vertical, une seconde portion de la partie inférieure avant du bloc optique des figures 1 et 2.

### Description détaillée de l'invention

L'invention a notamment pour but de proposer un bloc optique BO destiné à équiper un véhicule afin d'assurer au moins deux fonctions photométriques grâce à une pièce de support PS monobloc.

Dans ce qui suit, on considère, à titre d'exemple non limitatif, que le bloc optique BO est destiné à faire partie d'un véhicule de type automobile. Mais l'invention n'est pas limitée à ce type de véhicule. Elle concerne en effet tout véhicule devant comprendre au moins un bloc optique, et en particulier (bien que non exclusivement) les véhicules terrestres.

Par ailleurs, on considère dans ce qui suit, à titre d'exemple non limitatif, que le bloc optique BO est un feu arrière. Mais l'invention n'est pas limitée à ce type de bloc optique. Elle concerne aussi les blocs optiques BO qui constituent des feux avant ou phares (ou projecteurs) de véhicule.

On notera que le bloc optique BO peut être installé dans une sous-partie droite ou gauche ou centrale, avant ou arrière, d'un véhicule. Par conséquent, les formes des boîtiers BB des blocs optiques BO pourront varier selon leurs lieux d'implantation respectifs dans des véhicules. De même, les positions des éléments constituant les blocs optiques BO pourront varier en fonction des lieux d'implantation respectifs de ces derniers (BO).

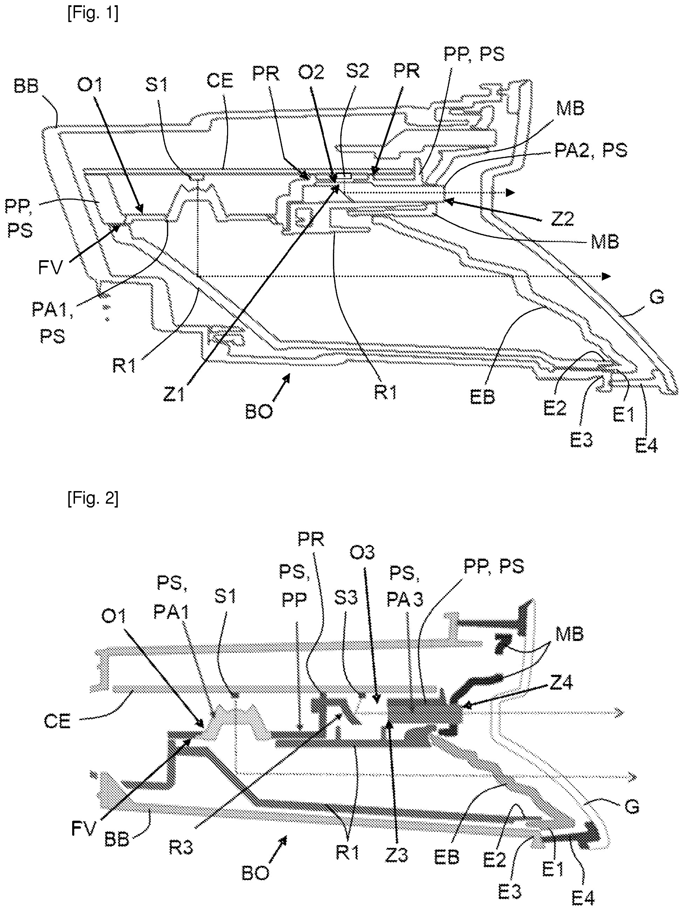

On a schématiquement illustré sur les figures 1 et 2 deux zones distantes (suivant la direction de la largeur) d'un exemple de réalisation d'un bloc optique BO selon l'invention.

Comme illustré, un bloc optique BO, selon l'invention, comprend un boîtier BB comportant des parois qui contribuent à délimiter un espace interne avec une glace (avant) G par laquelle sortent les photons participant aux fonctions photométriques différentes et dont le nombre est au moins égal à deux. Ces parois peuvent, par exemple, faire partie de deux demi-coques solidarisées entre elles.

Le boîtier BB (et donc l'espace interne) loge au moins deux sources de lumière Sj qui participent respectivement aux fonctions photométriques différentes, et une pièce de support PS monobloc en aval de ces sources de lumière Sj.

La pièce de support PS (monobloc) comprend une partie principale PP qui est réalisée par moulage d'une matière opaque et qui comporte au moins deux ouvertures Oj au voisinage desquelles sont respectivement solidarisées des parties auxiliaires PAj. Ces dernières (PAj) participent respectivement aux fonctions photométriques et sont réalisées par surmoulage d'au moins une matière non opaque permettant le passage de photons générés par les sources de lumière Sj.

En d'autres termes, on commence par réaliser la partie principale PP (avec ses ouvertures Oj) de la pièce de support PS par moulage (ou injection) d'une matière opaque aux photons, puis on réalise chaque partie auxiliaire PAj par surmoulage (ou injection) d'au moins une matière non opaque aux photons sur la partie principale PP, au voisinage de ses ouvertures Oj. On dispose ainsi d'une pièce de support PS monobloc assurant une partie de chaque fonction photométrique à laquelle participe une source de lumière Sj.

Cela permet de réduire notablement le nombre d'interfaces mécaniques (pour l'isostatisme et/ou le pré-maintien et/ou la fixation par vis ou clips), et donc de permettre une réduction de la masse, du temps d'assemblage, du coût, du risque de survenue de bruits parasites et/ou vibrations et du risque de fuite de lumière, et des contraintes de style, ainsi qu'une éventuelle réduction de dimensions du boîtier BB.

L'expression « au voisinage » signifie ici autour et/ou à côté.

Par exemple, la partie principale PP peut être réalisée par moulage d'une matière qui est choisie dans un groupe comprenant un polycarbonate (ou PC), un poly-méthacrylate de méthyle (ou PMMA), un acrylonitrile butadiène styrène (ou ABS) et un mélange de polycarbonate et acrylonitrile butadiène styrène (ou ABS PC).

Egalement par exemple, les parties auxiliaires PAj peuvent être réalisées par surmoulage d'une matière choisie dans un groupe comprenant un polycarbonate (ou PC) et un poly-méthacrylate de méthyle (ou PMMA). Egalement par exemple, chaque source de lumière Sj peut comporter au moins une diode électroluminescente (ou LED) ou au moins une diode laser ou un laser à gaz ou encore au moins une ampoule (éventuellement au xénon). Le choix du type d'une source de lumière Sj peut dépendre de la fonction photométrique concernée.

Dans l'exemple de réalisation illustré sur les figures 1 à 3, la pièce de support PS assure une partie de chacune des trois fonctions photométriques auxquelles participent respectivement trois sources de lumière S1 à S3 (j = 1 à 3). Mais le nombre de fonctions photométriques auxquelles participe (ou contribue) la pièce de support PS peut prendre n'importe quelle valeur supérieure ou égale à deux.

Par exemple, lorsque le bloc optique BO est un feu arrière, les fonctions photométriques auxquelles participe (ou contribue) la pièce de support PS, et plus précisément ses parties auxiliaires PAj, peuvent être choisies parmi une fonction de feu de stop, une fonction de feu de recul, une fonction de feu de brouillard, et une fonction d'indicateur de changement de direction (ou clignotant). Mais lorsque le bloc optique BO est un feu avant, les fonctions photométriques auxquelles participe (ou contribue) la pièce de support PS, et plus précisément ses parties auxiliaires PAj, peuvent être choisies parmi une fonction de feu de position (ou veilleuse ou encore lanterne), une fonction de feu de jour (ou DRL)) et une fonction d'indicateur de changement de direction, ainsi qu'éventuellement une fonction de feu de route, une fonction de feu de croisement et une fonction de feu de brouillard.

On notera qu'au moins une ouverture Oj peut être masquée (obturée) totalement par une partie au moins d'une partie auxiliaire PAj. C'est notamment le cas de la première partie auxiliaire PA1 qui masque totalement la première ouverture O1 et participe à la première fonction photométrique tout comme la première source de lumière S1, comme illustré sur les figures 1 à 3. La première partie auxiliaire PA1 est ici solidarisée fixement à la partie principale PP, par surmoulage autour de sa première ouverture O1.

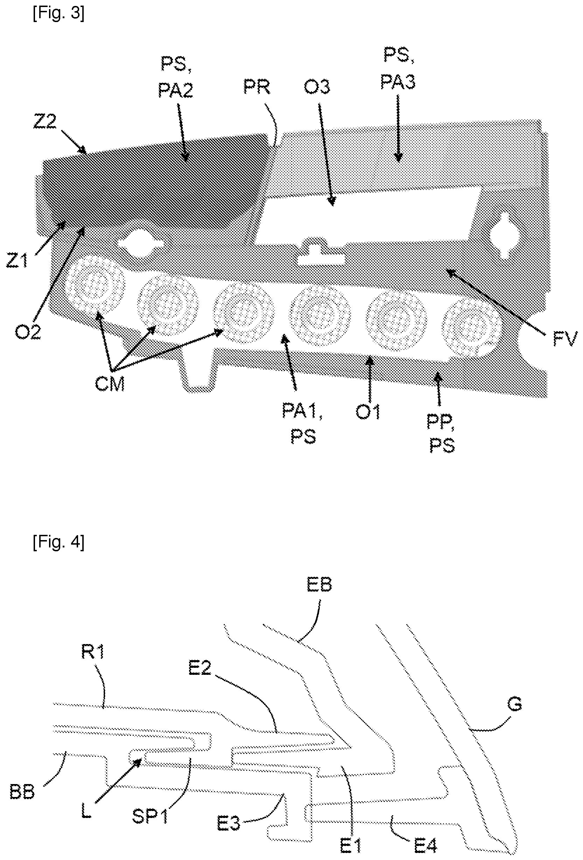

C'est aussi le cas de la deuxième partie auxiliaire PA2 qui masque totalement la deuxième ouverture O2 et participe à la deuxième fonction photométrique tout comme la deuxième source de lumière S2, comme illustré sur les figures 1 et 3. La deuxième partie auxiliaire PA2 est ici solidarisée fixement à la partie principale PP, par surmoulage autour de sa deuxième ouverture O2 et sur une partie de sa face avant FV (opposée à la deuxième source de lumière S2) qui s'étend en direction de la glace G.

Dans le cas d'un masquage complet, la partie auxiliaire PAj peut, par exemple, constituer un guide de lumière (éventuellement de type plat) propre à guider jusqu'à une zone de sortie Z2 qu'il comprend des photons qui sont générés par la source de lumière Sj associée et qui ont traversé l'ouverture Oj associée, ou bien un élément optique de collimation propre à transmettre de façon collimatée des photons qui sont générés par la source de lumière Sj associée en direction d'un réflecteur R1 qui est logé dans le boîtier BB en aval de la pièce de support PS.

Ainsi, dans l'exemple illustré non limitativement sur les figures 1 à 3, la première partie auxiliaire PA1 constitue un élément optique de collimation qui collimate les photons issus de la première source de lumière S1 vers le réflecteur R1 placé en aval et qui se charge de les réfléchir vers la glace G (ici via un écran EB), et dans l'exemple illustré non limitativement sur les figures 1 et 3, la deuxième partie auxiliaire PA2 constitue un guide de lumière qui comprend une zone d'entrée Z1 par laquelle pénètrent les photons issus de la deuxième source de lumière S2 et qui est chargé de guider ces photons jusqu'à sa zone de sortie Z2 située en regard de la glace G.

On notera que dans l'exemple illustré non limitativement sur la figure 3, l'élément optique de collimation PA1 comprend six collimateurs CM qui sont placés en regard de six sous-sources de la première source de lumière S1, chaque sous-source comprenant par exemple au moins une diode électroluminescente (et possiblement plusieurs). Le nombre de collimateurs CM et le nombre de sous-sources peuvent prendre n'importe quelle valeur supérieure ou égale à un.

La première partie auxiliaire PA1 pourrait assurer une autre fonction optique, comme par exemple une fonction de guidage de lumière. De même, la deuxième partie auxiliaire PA2 pourrait assurer une autre fonction optique, comme par exemple une fonction de focalisation (ou concentration) ou de dispersion.

On notera également que la partie principale PP peut comprendre une face avant opposée aux sources de lumière Sj et sur laquelle est solidarisée au moins une partie auxiliaire PAj au voisinage d'une ouverture Oj associée et partiellement masquée par un réflecteur R3 chargé de réfléchir des photons générés par la source de lumière Sj associée vers cette partie auxiliaire PAj. C'est ici le cas de la troisième partie auxiliaire PA3 qui participe à la troisième fonction photométrique tout comme la troisième source de lumière S3, et du réflecteur R3 qui masque partiellement la troisième ouverture O3, comme illustré sur les figures 2 et 3. La troisième partie auxiliaire PA3 est ici solidarisée fixement à la partie principale PP, par surmoulage autour de sa troisième ouverture O3 et sur une partie de sa face avant FV opposée aux sources de lumière.

Dans l'exemple illustré non limitativement sur les figures 2 et 3, la troisième partie auxiliaire PA3 constitue un guide de lumière qui comprend une zone d'entrée Z3 par laquelle pénètrent les photons issus de la troisième source de lumière S3 et réfléchis par le réflecteur R3, et qui est chargé de guider ces photons jusqu'à sa zone de sortie Z4 située en regard de la glace G. Mais la troisième partie auxiliaire PA3 pourrait assurer une autre fonction optique, comme par exemple une fonction de focalisation (ou concentration) ou de dispersion.

On notera également, comme illustré non limitativement sur les figures 1 et 2, que le boîtier BB peut loger une carte électronique CE comportant une face avant orientée vers la face arrière de la partie principale PP (en regard des sources de lumière Sj) et sur laquelle sont installées les sources de lumière Sj. Dans ce cas, la carte électronique CE est préférentiellement couplée à la pièce de support PS (notamment pour réduire les dispersions de focalisation des sources de lumière par rapport aux différentes optiques (en particulier lorsqu'il s'agit de LEDs)). Cette carte électronique CE peut, par exemple, être une carte à circuits imprimés de type PCB (« Printed Circuit Board »).

On notera également, comme illustré non limitativement sur les figures 1 à 3, qu'au moins une protubérance arrière PR peut être érigée à partir de la face arrière de la partie principale PP (orientée vers les sources de lumière Sj). Dans ce cas, cette (chaque) protubérance arrière PR définit un muret de séparation entre fonctions photométriques. Ici, il y a notamment un muret de séparation PR qui sépare (et isole) les deuxième S2 et troisième S3 sources de lumière participant respectivement aux deuxième et troisième fonctions photométriques. On pourrait aussi prévoir un muret de séparation PR séparant (et isolant) les première S1 et deuxième S2 sources de lumière participant aux première et deuxième fonctions photométriques, et/ou un muret de séparation PR séparant (et isolant) les première S1 et troisième S3 sources de lumière participant aux première et troisième fonctions photométriques.

On comprendra que chaque protubérance arrière PR permet avantageusement d'éviter les fuites de photons d'une fonction photométrique vers au moins une autre fonction photométrique, en amont de la face arrière de la partie principale PP.

De préférence, la pièce de support PS est solidarisée fixement à la face interne du boîtier BB, par exemple par clippage ou vissage.

Par exemple, la carte électronique CE peut être fixée sur la pièce de support PS, ce qui constitue un premier ensemble qui est ensuite fixé sur le réflecteur R1, le tout constituant alors un second ensemble qui peut être fixé à l'intérieur du boitier BB. Ensuite, les éventuels masques et écran(s) peuvent être fixés sur le second ensemble.

Les types des fixations (clips, vis, etc.) dépendent du contexte (industrialisation, encombrement, faisabilité technique, contrainte mécanique, etc.).

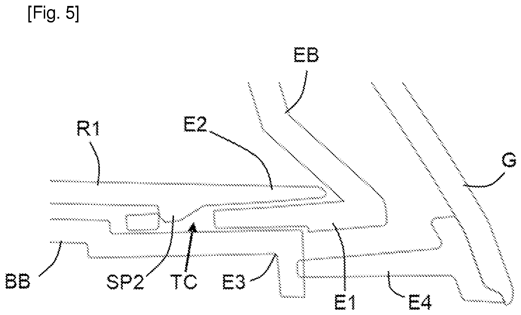

Afin de réduire encore plus les fuites de lumière dans le boîtier BB, les zones de liaison (ou couplage) entre certains éléments peuvent avoir des agencements spécifiques définissant des pièges à lumière. C'est notamment le cas dans la partie inférieure avant du bloc optique BO, illustrée non limitativement sur les figures 4 et 5. Ici, un premier bord d'extrémité inférieur avant E1 de l'écran EB est replié vers l'arrière (à l'opposé de la glace G) et un deuxième bord d'extrémité inférieur avant E2 du réflecteur R1 (participant à la première fonction photométrique) est placé au-dessus (sensiblement parallèlement sur toute la largeur) du premier bord d'extrémité inférieur avant E1, afin d'empêcher le passage de photons de la première fonction photométrique vers la glace G située en aval, dans la partie inférieure avant du bloc optique BO.

On notera, comme illustré non limitativement sur la figure 4, que le réflecteur R1 peut comprendre au moins une protubérance SP1 solidarisée fixement à son deuxième bord d'extrémité inférieur avant E2 en saillant vers l'arrière (à l'opposé de la glace G) et destiné à être logé, lors de l'assemblage, dans un logement L correspondant et défini localement dans la partie inférieure avant du boîtier BB en amont de son troisième bord d'extrémité inférieur avant E3 (auquel est solidarisé le bord inférieur E4 de la glace G). Cela permet de maintenir verticalement la partie inférieure avant du réflecteur R1 par rapport à la partie inférieure avant du boîtier BB.

Par ailleurs, et comme illustré non limitativement sur la figure 5, le deuxième bord d'extrémité inférieur avant E2 du réflecteur R1 peut comprendre au moins un trou TC destiné à recevoir une protubérance SP2 correspondante du premier bord d'extrémité inférieur avant E1 de l'écran EB. Cette (chaque) protubérance SP2 définit ainsi un moyen de clippage permettant de clipper la partie inférieure avant du réflecteur R1 sur la partie inférieure avant du boîtier BB afin que le réflecteur R1 soit immobilisé suivant les deux directions de l'espace qui sont perpendiculaires à la direction verticale.

## Revendications

1. Bloc optique (BO) destiné à équiper un véhicule et comprenant un boîtier (BB) logeant au moins deux sources de lumière (Sj) participant respectivement à des fonctions photométriques différentes, **caractérisé en ce que** ledit boîtier (BB) loge, en aval desdites sources de lumière (Sj), une pièce de support (PS) monobloc et comprenant une partie principale (PP) réalisée par moulage d'une matière opaque et comportant au moins deux ouvertures (Oj) au voisinage desquelles sont respectivement solidarisées des parties auxiliaires (PAj) participant respectivement auxdites fonctions photométriques et réalisées par surmoulage d'au moins une matière non opaque permettant le passage de photons générés par lesdites sources de lumière (Sj) ;
ladite partie principale (PP) comprend une face avant opposée auxdites sources de lumière (Sj) et sur laquelle est solidarisée au moins une partie auxiliaire (PA3) au voisinage d'une ouverture (O3) associée, l'ouverture est partiellement masquée par un réflecteur (R3) réfléchissant des photons générés par la source de lumière (S3) associée vers cette partie auxiliaire (PA3).

2. Bloc optique selon la revendication 1, **caractérisé en ce que** l'au moins une ouverture (Oj) est masquée totalement par une partie au moins d'une partie auxiliaire (PAj).

3. Bloc optique selon la revendication 2, **caractérisé en ce que** ladite partie auxiliaire (PAj) constitue un guide de lumière propre à guider jusqu'à une zone de sortie qu'il comprend des photons générés par la source de lumière (Sj) associée et ayant traversé l'ouverture (Oj) associée, ou un élément optique de collimation propre à transmettre de façon collimatée des photons générés par la source de lumière (Sj) associée en direction d'un réflecteur (R1) logé dans ledit boîtier (BB).

4. Bloc optique selon l'une des revendications 1 à 3, **caractérisé en ce que** lesdites parties auxiliaires (PAj) sont réalisées par surmoulage d'une matière choisie dans un groupe comprenant un polycarbonate et un poly-méthacrylate de méthyle.

5. Bloc optique selon l'une des revendications 1 à 4, **caractérisé en ce que** ladite partie principale (PP) est réalisée par moulage d'une matière choisie dans un groupe comprenant un polycarbonate, un poly-méthacrylate de méthyle, un acrylonitrile butadiène styrène et un mélange de polycarbonate et acrylonitrile butadiène styrène.

6. Bloc optique selon l'une des revendications 1 à 5, **caractérisé en ce que** ledit boîtier (BB) loge une carte électronique (CE), d'une part, comportant une face avant orientée vers une face arrière de ladite partie principale (PP) et sur laquelle sont installées lesdites sources de lumière (Sj), et, d'autre part, couplée à ladite pièce de support (PS).

7. Bloc optique selon l'une des revendications 1 à 6, **caractérisé en ce que** ladite partie principale (PP) comprend une face arrière orientée vers lesdites sources de lumière (Sj) et à partir de laquelle est érigée au moins une protubérance arrière (PR) définissant un muret de séparation entre fonctions photométriques.

8. Véhicule, **caractérisé en ce qu'**il comprend au moins un bloc optique (BO) selon l'une des revendications précédentes.

9. Véhicule selon la revendication 8, **caractérisé en ce qu'**il est de type automobile.

## Patentansprüche

1. Optische Einheit (BO), die zur Ausrüstung eines Fahrzeugs bestimmt ist und ein Gehäuse (BB) umfasst, in dem mindestens zwei Lichtquellen (Sj) untergebracht sind, die jeweils an unterschiedlichen photometrischen Funktionen beteiligt sind, **dadurch gekennzeichnet, dass** das Gehäuse (BB) hinter den Lichtquellen (Sj) ein einteiliges Stützstück (PS) umfasst, das aus einem Hauptteil (PP) besteht, das durch Formen eines undurchsichtigen Materials hergestellt wird und mindestens zwei Öffnungen (Oj) aufweist, in deren Nähe jeweils an den Hilfsteilen (PAj) befestigt, die jeweils an den genannten photometrischen Funktionen beteiligt sind, und durch Umspritzen von mindestens einem nicht undurchsichtigen Material hergestellt werden, das den Durchgang von Photonen ermöglicht, die von den Lichtquellen (Sj) erzeugt werden;
Das Hauptteil (PP) weist eine den Lichtquellen (Sj) gegenüberliegende Vorderseite auf, an der mindestens ein Hilfsteil (PA3) in der Nähe einer zugehörigen Öffnung (O3) angebracht ist, wobei die Öffnung teilweise durch einen Reflektor (R3) verdeckt ist, der Photonen reflektiert, die von der zugehörigen Lichtquelle (S3) zu diesem Hilfsteil (PA3) erzeugt werden.

2. Optischer Block nach Anspruch 1, **dadurch gekennzeichnet, dass** mindestens eine Apertur (Oj) durch mindestens einen Teil eines Hilfsteils (PAj) vollständig verdeckt wird.

3. Optischer Block nach Anspruch 2, **dadurch gekennzeichnet, dass** das Hilfsteil (PAj) einen Lichtleiter darstellt, der in der Lage ist, Photonen zu leiten, die von der zugehörigen Lichtquelle (Sj) erzeugt werden, und der durch die zugehörige Apertur (Oj) zu einem Ausgangsbereich gelangt ist, den er umfasst, oder ein optisches Kollimationselement, das in der Lage ist, Photonen, die von der zugehörigen Lichtquelle (Sj) erzeugt werden, kollimiert zu einem Reflektor (R1) zu übertragen, der in dem Gehäuse (BB).

4. Optischer Block nach einem der Ansprüche 1 bis 3, **dadurch gekennzeichnet, dass** die Hilfsteile (PAj) durch Umspritzen eines Materials hergestellt werden, das aus einer Gruppe bestehend aus Polycarbonat und Polymethylmethacrylat ausgewählt ist.

5. Optischer Block nach einem der Ansprüche 1 bis 4, **dadurch gekennzeichnet, dass** der Hauptteil (PP) durch Formen eines Materials hergestellt wird, das aus einer Gruppe ausgewählt ist, die Polycarbonat, Polymethylmethacrylat, Acrylnitril-Butadien-Styrol und ein Gemisch aus Polycarbonat und Acrylnitril-Butadien-Styrol umfasst.

6. Optische Einheit nach einem der Ansprüche 1 bis 5, **dadurch gekennzeichnet, dass** das Gehäuse (BB) einerseits eine Elektronikplatine (CE) beherbergt, die einerseits eine zu einer Rückseite des Hauptteils (PP) ausgerichtete Vorderseite aufweist und auf der die Lichtquellen (Sj) angebracht sind, und andererseits mit dem Stützstück (PS) gekoppelt ist.

7. Optischer Block nach einem der Ansprüche 1 bis 6, **dadurch gekennzeichnet, dass** der Hauptteil (PP) eine zu den Lichtquellen (Sj) ausgerichtete Rückfläche aufweist und von der aus mindestens ein hinterer Vorsprung (PR) errichtet ist, der eine Wand definiert, die photometrische Funktionen trennt.

8. Fahrzeug, **dadurch gekennzeichnet, dass** es mindestens eine optische Einheit (BO) nach einem der vorhergehenden Ansprüche umfasst.

9. Fahrzeug nach Anspruch 8, **dadurch gekennzeichnet, dass** es sich um einen Kraftfahrzeugtyp handelt.

## Claims

1. Optical unit (BO) intended to equip a vehicle and comprising a housing (BB) housing at least two light sources (Sj) each participating in different photometric functions, **characterised in that** said housing (BB) houses, downstream of said light sources (Sj), a one-piece support piece (PS) comprising a main part (PP) made by moulding an opaque material and comprising at least two openings (Oj) in the vicinity of which are respectively attached to the auxiliary parts (PAj) participating respectively in the said photometric functions and made by overmolding at least one non-opaque material allowing the passage of photons generated by said light sources (Sj);
said main part (PP) comprises a front face opposite to said light sources (Sj) and on which at least one auxiliary part (PA3) is attached in the vicinity of an associated opening (03), the opening is partially masked by a reflector (R3) reflecting photons generated by the associated light source (S3) towards this auxiliary part (PA3).

2. An optical block according to claim 1, **characterised in that** at least one aperture (Oj) is completely obscured by at least one part of an auxiliary part (PAj).

3. An optical block according to claim 2, **characterized in that** said auxiliary part (PAj) constitutes a light guide capable of guiding photons generated by the associated light source (Sj) and having passed through the associated aperture (Oj) to an output area that it comprises, or an optical collimation element capable of transmitting photons generated by the associated light source (Sj) in a collimated manner towards a reflector (R1) housed in said case (BB).

4. An optical block according to one of claims 1 to 3, **characterized in that** said auxiliary parts (PAj) are made by overmolding a material selected from a group comprising polycarbonate and polymethyl methacrylate.

5. An optical block according to one of claims 1 to 4, **characterised in that** said main part (PP) is made by moulding a material selected from a group comprising polycarbonate, poly-methyl methacrylate, acrylonitrile butadiene styrene and a mixture of polycarbonate and acrylonitrile butadiene styrene.

6. An optical unit according to one of claims 1 to 5, **characterized in that** said housing (BB) houses an electronic board (CE), on the one hand, having a front face oriented towards a rear face of said main part (PP) and on which said light sources (Sj) are installed, and, on the other hand, coupled to said support piece (PS).

7. An optical block according to one of claims 1 to 6, **characterised in that** said main part (PP) comprises a rear face oriented towards said light sources (Sj) and from which at least one rear protrusion (PR) is erected defining a wall separating photometric functions.

8. Vehicle, **characterised in that** it comprises at least one optical unit (BO) according to one of the preceding claims.

9. A vehicle according to claim 8, **characterised in that** it is of an automobile type.
